# DEMANDE DE BREVET EUROPEEN

(11) **EP 1 564 680 A1**
(43) Date de publication de la demande: **17.08.2005**
(21) Numéro de dépôt: 04292089.2
(22) Date de dépôt: 25.08.2004
(51) Int. Cl.: G06K 19/10

(54) **Carte comportant une puce et un élément de sécurité physique logiquement lié à la puce**

(30) Priorité: 12.02.2004 EP 04290386
(71) Demandeur: Axalto S.A., 92120 Montrouge (FR)
(72) Inventeur: Launay, Nathalie c/o Axalto S.A., 92120 Montrouge (FR); Vere, Denis c/o Axalto S.A., 92120 Montrouge (FR); Salgado, Stéphanie c/o Axalto S.A., 92120 Montrouge (FR); Perrion, Fabrice c/o Axalto S.A., 92120 Montrouge (FR)

(57) **Abrégé**

L'invention concerne un objet portatif sécurisé comportant un corps d'objet (11), une puce électronique (12) et des moyens (13) pour permettre une communication dudit objet avec le monde extérieur, ainsi qu'un procédé de sécurisation associé. L'invention se caractérise en ce que l'objet comporte en outre des données (14), des données encodées (15) correspondant à ces données et une clé, et en ce que les données encodées sont aptes à être décodées au moyen d'un algorithme cryptographique et de ladite clé. L'invention s'applique en particulier aux cartes à puce.

## Description

L'invention concerne un objet portatif sécurisé comprenant un corps d'objet, une puce électronique et des moyens pour permettre une communication dudit objet avec le monde extérieur, ainsi qu'un procédé de sécurisation d'un tel objet.

Elle concerne plus particulièrement des cartes à puce.

Les cartes à puce sont des objets normalisés comprenant un corps de carte, une puce et une interface de communication avec le monde extérieur.

Le corps de carte comporte des données qui peuvent être fixes, c'est-à-dire qui ne dépendent pas de son titulaire, ou alors, variables. Ces données sont bien souvent imprimées sur le corps de carte. Il s'agit par exemple d'un numéro de carte ou d'une photographie.

De même, la puce comporte différents types de données dont des données fixes et variables, ces données étant enregistrées dans une mémoire de la puce.

L'interface de communication entre la carte et le monde extérieur est formée par des contacts affleurants du corps de carte ou d'une antenne noyée dans ce corps de carte. Selon les moyens de communication dont elle dispose, la carte est dite à contacts, sans contact, hybride ou dual interface (interface double).

Il est possible de sécuriser les cartes à puce par l'adjonction, au corps de carte, de données fixes, pour la traçabilité d'un lot de cartes, ou de données variables, pour une sécurisation liée au porteur d'objet.

Pour une sécurisation optimale, ces données sont cachées sur le corps d'objet.

Une telle sécurisation par adjonction de données cachées peut par exemple être réalisée sous la forme d'une image cachée imprimée sur le corps de carte. Cette image est alors imprimée au cours de l'impression du visuel de fond si les données sont fixes, ou alors, au cours de l'étape de personnalisation de la carte, si les données sont variables. Elle peut être réalisée selon différentes techniques telles que le digital watermarking (tatouage numérique) ou les techniques commercialisées sous les appellations CRYPTOGLYPHE™, SCRAMBLED INDICIA™, IPI™ ou ICI™.

La sécurisation par adjonction de données cachées peut encore être réalisée par l'adjonction d'un élément de sécurité physique au corps d'objet. Il s'agit par exemple de nano code-barres physiques donnant une réponse sécurisée, notamment un signal magnétique, ou tous autres éléments de sécurité inviolables.

Une technique particulière permet de relier l'élément de sécurité à un autre élément de l'objet portatif. Il s'agit de la technique développée par la Société NOVATEC™ pour l'élément de sécurité appelé PROOFTAG™, et qui repose sur la génération de bulles aléatoires. Dans ce cas, l'interrogation de la base de données pour décoder le PROOFTAG™ s'accompagne d'une vérification avec la piste magnétique ou avec des données imprimées du corps de carte.

Néanmoins, de manière générale, la vérification après lecture des informations de sécurisation physique cachées nécessite l'accès à une base de données, ce qui engendre des difficultés de stockage de ces données, de sécurisation des données stockées et, tout simplement, d'accès à ces données.

Compte tenu de ce qui précède, un problème que se propose de résoudre l'invention est de réaliser un objet portatif sécurisé, ainsi qu'un procédé de sécurisation d'un tel objet, qui pallient aux inconvénients précités de l'état de la technique et qui ne requiert pas d'accès à une base de données pour la vérification de l'élément sécurisé.

La solution de l'invention à ce problème posé a pour premier objet, un objet portatif sécurisé comportant un corps d'objet, une puce électronique et des moyens pour permettre une communication dudit objet avec le monde extérieur, caractérisé en ce qu'il comporte en outre des données, des données encodées correspondant à ces données et une clé, et en ce que les données encodées sont aptes à être décodées au moyen d'un algorithme cryptographique et de ladite clé.

Elle a pour second objet un procédé de sécurisation d'un objet portatif comportant un corps d'objet, une puce électronique et des moyens pour permettre une communication dudit objet avec le monde extérieur, caractérisé en ce qu'il comporte les étapes suivantes, selon lesquelles : l'objet est muni de données, de données encodées correspondant à ces données et d'une clé ; les données encodées sont décodées au moyen d'un algorithme cryptographique et de la clé ; et les données encodées puis décodées sont comparées aux données.

Comme la clé de l'algorithme cryptographique est enregistrée dans l'objet, notamment dans une mémoire de la puce, il est possible d'utiliser cette clé pour décrypter les données encodées et obtenir des données décodées correspondant aux données natives. Une comparaison entre ces données décodées et ces données natives peut ainsi être effectuée pour vérifier l'absence de fraude sur l'objet, sans qu'il soit cependant nécessaire d'accéder à une base de données.

L'invention sera mieux comprise à la lecture de la description non limitative qui va suivre, rédigée au regard des dessins annexés, dans lesquels :
- les figures 1A et 1B montrent, respectivement en vue de dessus et en coupe transversale, un mode de réalisation d'une carte selon l'invention ; et
- la figure 2 illustre un mode de mise en oeuvre du procédé selon l'invention.

L'objet portatif sécurisé selon l'invention est une carte à puce ou tout autre objet portatif sécurisé intégrant une puce électronique. Il peut donc s'agir d'un passeport sécurisé ou d'un visa électronique. Dans le cas d'une carte à puce, la carte peut être à contacts, sans contact, hybride ou dite dual interface.

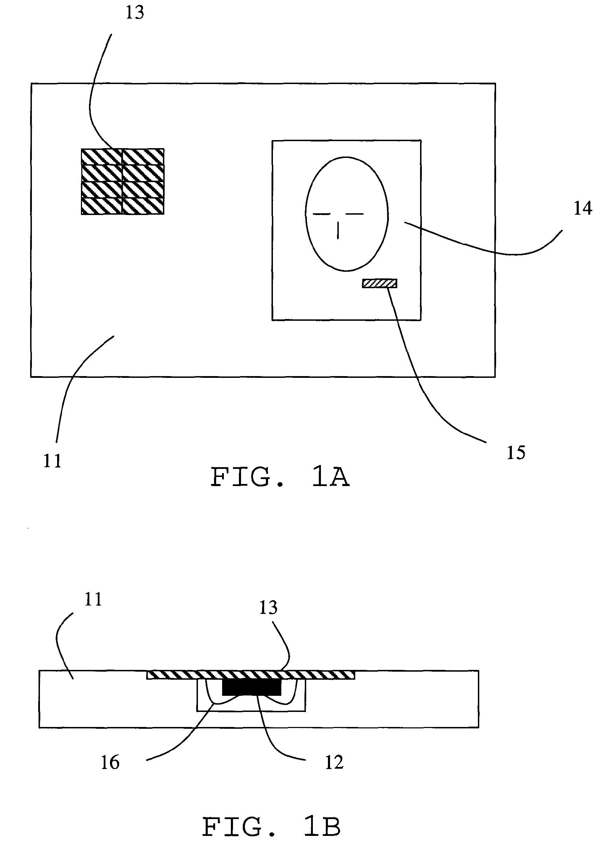

Les figures 1A et 1B se réfèrent à une carte à puce à contacts. Cette carte possède un corps de carte 11, une puce électronique 12 ainsi que des moyens pour permettre une communication de ladite carte avec le monde extérieur, ces moyens étant formés par un ensemble de plages de contact 13.

Le corps de carte est réalisé par d'une pluralité de feuilles thermoplastiques assemblées par laminage à chaud. Ces dimensions sont définies par la norme ISO 7810. Elles sont de 86 mm de longueur, 54 mm le largeur et 0,76 mm d'épaisseur.

Le corps de carte 11 possède des données fixes, et par suite communes à un lot de cartes, ou alors, variables, et par suite uniques pour chaque carte. Dans l'exemple des figures 1A et 1B, ces données sont des données variables visibles constituées par une photographie 14 visible du titulaire de la carte. En outre, le corps de carte comporte des données encodées 15 et un lien de correspondance existe entre les données non encodées dites natives et ces données encodées. En effet, les données encodées sont formées de l'image des données natives obtenue par encodage au moyen d'un algorithme cryptographique et d'une clé. Dans le présent exemple, il s'agit d'une signature numérique obtenue à partir des données de l'image du titulaire de la carte, cette signature étant obtenue par un algorithme cryptographique asymétrique à clé privée/clé publique tel que le RSA (Rivest, Shamir, Adleman) ou l'algorithme Diffie Hellman.

Les données encodées sont disposées imprimées sur le corps de carte. Elles peuvent être cachées selon les procédés connus de l'art antérieur et en particulier cités dans le préambule de la présente description, ou alors, elles peuvent être visibles. Quoi qu'il en soit, selon l'invention il n'est pas possible de vérifier de manière immédiate la correspondance entre les données natives 14 et les données encodées 15 sans la connaissance de l'algorithme permettant le décodage et de la clé, une clé publique dans le cas du RSA.

La puce 12 est notamment un microcontrôleur muni de mémoires volatiles (RAM) et non volatiles du type EEPROM. Elle peut contenir, pour certaines applications sécuritaires, un crypto processeur associé. Cette puce 12 comporte des plots, ces plots étant connectés aux plages de contact 13 de la carte, par des fils conducteurs 16 (wire bonding) dans l'exemple des figures 1A et 1B. Elle est en outre enrobée d'une résine protectrice, l'ensemble puce 12, fils conducteurs 16, résine protectrice et plages conductrices 13 formant un micromodule incorporé dans une cavité du corps de carte 11.

Selon l'invention la clé permettant le décodage des données encodées est enregistrée dans la carte. Elle est soit enregistrée dans une mémoire non volatile de la puce, soit imprimée et cachée sur le corps de carte, par exemple sous la forme d'une impression code à barres de capacité suffisante, ce qui permettra de décoder les données encodées même dans le cas où la puce ne fonctionne pas.

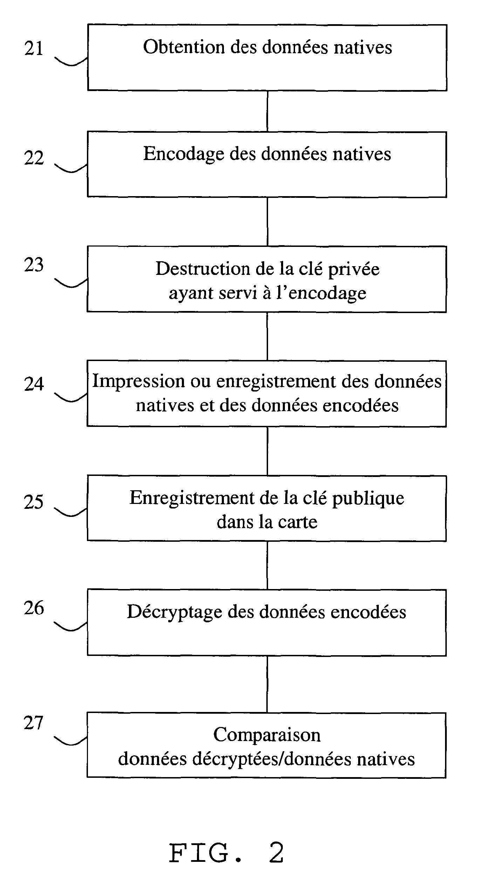

La figure 2 montre les différentes étapes du procédé de sécurisation d'une carte selon l'invention.

Ainsi que cela est montré à cette figure, les données natives, fixes ou variables, de personnalisation de la carte sont tout d'abord obtenues 21. Il s'agit par exemple de données numériques provenant d'un de l'enregistrement par scanner d'une photographie du titulaire de la carte ou d'un numéro de série de la carte.

Les données obtenues sont alors encodées 22 en vue d'obtenir des données encodées au moyen d'un algorithme de cryptage et d'une clé privée générée pour l'encodage, cette clé privée étant par exemple une clé privée de 128 bits couramment utilisée dans les systèmes cryptographiques actuels.

De manière à améliorer encore la sécurisation du procédé selon l'invention, la clé privée ayant permis l'encodage est détruite 23. Ainsi, sans la connaissance de la clé privée, il n'est pas possible de crypter de nouveau les données de manière à obtenir des données encodées. Un fraudeur ne pourra donc pas reproduire les données encodées, même s'il le souhaite.

Puis la carte est munie des données natives et des données encodées 24. Si ces données sont des données destinées au corps de carte, par exemple une photographie et une signature de cette photographie, elles sont imprimées sur le corps de carte au cours de la personnalisation physique de la carte. Dans le cas où ces données sont des données numériques destinées à être enregistrées dans la ou l'une des puces de la carte, par exemple, un numéro de série de la carte et un encodage de ce numéro, elles sont enregistrées durant la personnalisation électrique de la carte. Différentes variantes de réalisation sont ici possible selon l'invention : soit les données natives et les données encodées sont positionnées sur le corps de carte ; soit les données natives et les données encodées sont enregistrées dans une ou plusieurs puces ; soit les données natives sont positionnées sur le corps de carte et les données encodées sont enregistrées dans la puce (ce qui sera généralement le cas) ; ou soit les données natives sont enregistrées dans la puce et les données encodées sont positionnées sur le corps de carte.

Enfin, conformément à l'étape référencée 25 à la figure 2, la clé publique apte à assurer le décodage des données codées en combinaison avec un algorithme de décryptage est enregistrée dans une mémoire de la puce ou d'une des puces si la carte en possède plusieurs. La clé publique peut aussi être cachée dans le corps de carte.

Pour la vérification de l'absence de fraude sur la carte selon l'invention, la clé publique, qui est récupérée dans la puce ou sur le corps de carte, est utilisée pour décrypter les données encodées 26.

Les données décryptées sont alors comparées 27 avec les données natives de manière à vérifier leur correspondance. Si cette correspondance existe, alors la carte n'a normalement pas fait l'objet d'une fraude. Si cette correspondance n'existe pas, alors la carte a fait l'objet d'une fraude. Aucun accès à une base de données n'est nécessaire.

En définitive, il existe un lien sécurisé entre l'élément de sécurité physique caché (les données encodées) en général sur le corps d'objet et la puce (sans contact ou à contacts) et ce lien permet - de s'abstenir de l'utilisation de bases de données pour la vérification des données variables ; - de lutter à la fois contre la fraude sur la puce électronique, par exemple, dans le cas d'une carte à puce à contacts, de lutter contre l'échange du module du corps de carte, et contre la falsification sur le corps de carte, par exemple, dans le cas d'une carte personnalisée, pour lutter contre la falsification de la photographie imprimée ; et - d'imprimer le niveau de sécurité de l'élément physique au niveau de sécurité optimal de la puce.

En outre, ce lien sécurisé entre l'élément de sécurité physique caché, fixe ou variable, et la ou les puces de l'objet est réalisé grâce à un système cryptographique qui peut soit : - sécuriser les données de l'élément de sécurité physique caché vers la ou les puces ; soit - sécuriser les données de la ou les puces vers les données physiques de l'élément de sécurité physique caché.

Bien entendu, de nombreux modes de réalisation selon l'invention, qui ne sont pas divulgués dans la présente description, et qui sont à la portée de l'homme du métier ayant connaissance de cette description, sont contenus dans le cadre large de l'invention. Les exemples qui suivent constituent quelques modes de réalisation parmi d'autres. Les exemples 1 à 4 sont des exemples dans lesquels le lien de sécurité est réalisé dans le sens de sécurisation des données physiques du porteur vers la puce. Les exemples 5 et 6 sont des exemples dans lesquels le lien de sécurité est réalisé dans le sens de sécurisation des données de la puce vers les données physiques du porteur.

### Exemple 1 : carte munie d'une photographie et de

### l'image brouillée de cette photographie

Au cours de la personnalisation d'une carte, la photographie du titulaire est scannée puis encodée sous la forme d'une image brouillée par un algorithme A avec une clé privée. La photographie du titulaire de la carte et l'image brouillée de cette photographie sont ensuite imprimées sur le corps de carte, l'image brouillée étant cachée dans la photographie par une technique du type digital watermarking, CRYPTOGLYPHE (TM), SCRAMBLED INDICIA (TM), IPI (TM) ou ICI (TM). Une fois, mise en circulation, pour vérifier que la carte n'a pas fait l'objet d'une fraude, il suffit de scanner l'image brouillée, de la décoder avec un algorithme B (correspondant à l'algorithme A) et la clé publique préalablement stockée dans la puce. Ce décodage de l'image brouillée permet d'obtenir une photographie qu'il suffit de superposer des repères particuliers de cette photographie avec ces mêmes repères sur la photographie originale du corps de carte pour vérifier la validité de la carte. Un exemple de repère peut être un point de l'axe entre les deux yeux du titulaire de la carte tels que représentés sur une photographie numérique.

### Exemple 2 : première variante de l'exemple 1

Dans cet exemple, les données encodées de l'exemple 1, c'est-à-dire l'image brouillée, ne sont pas imprimées sur le corps de carte. Elles sont simplement enregistrées dans la puce, voire même dans une seconde puce de la carte.

### Exemple 3 : seconde variante de l'exemple 1

Dans cet exemple, l'information de l'image cachée lue puis décryptée par l'algorithme B est comparée par la puce avec une information imprimée sur la carte autre que l'impression de la donnée brouillée telle qu'un code à barres en une dimension ou en deux dimensions ou une ligne OCR (Optical Character Recognition - Reconnaissance Optique de Caractères) .

### Exemple 4 : troisième variante de l'exemple 1

Dans cet exemple, un test complémentaire est effectué pour vérifier que la carte n'a pas été contrefaite, même si on a pu décrypter l'information cachée, peut consister à : - saisir des caractéristiques de l'image imprimée après impression; - stocker ces caractéristiques uniques pour une carte donnée ; et - utiliser cette donnée comme élément de contrôle réponse vrai/faux en plus de la lecture de l'information cachée décryptée.

### Exemple 5 : Carte pour laquelle des données de la puce sont encodées

Dans ce cas, ce sont les données variables enregistrées dans la puce de la carte, ou l'une des puces si la carte en possède plusieurs, qui sont cryptées par un algorithme A à l'aide d'une clé privée générée dans cette puce pour être transformées en une image encodée cachée au moyen d'une technique du type digital watermarking, CRYPTOGLYPHE™, SCRAMBLED INDICIA™, IPI™ ou ICI™, cette image encodée étant imprimée lors de la personnalisation de la carte. Lors du décryptage avec la clé publique, par ailleurs enregistrée dans la puce, un algorithme B, correspondant à l'algorithme A, permet de décoder l'image encodée cachée et ainsi vérifier l'information avec les données stockées dans la puce. En pratique, les données qui font l'objet d'un encodage sont le numéro du fondeur ou le numéro de série de la carte.

### Exemple 6 : variante de l'exemple 5

Dans cet exemple, les données cryptées ne sont pas des données telles que le numéro de fondeur ou le numéro de série de la carte mais une réponse du titulaire de la carte à une question donnée telle que, par exemple, le nom de jeune fille de la mère du titulaire. Pour vérifier l'authenticité de la carte selon l'invention, la donnée cryptée et décryptée et la réponse est comparée avec la réponse se trouvant par ailleurs sur le corps de carte et/ou avec la réponse donnée par le titulaire de la carte.

## Revendications

1. Objet portatif sécurisé comportant un corps d'objet (11), une puce électronique (12) et des moyens (13) pour permettre une communication dudit objet avec le monde extérieur, **caractérisé en ce qu'**il comporte en outre des données (14), des données encodées (15) correspondant à ces données et une clé, et **en ce que** les données encodées sont aptes à être décodées au moyen d'un algorithme cryptographique et de ladite clé.

2. Objet selon la revendication 1, **caractérisé en ce qu'**il comporte un lien sécurisé entre la puce électronique (12) et le corps d'objet (11).

3. Objet selon l'une des revendications 1 ou 2, **caractérisé en ce que** les données (14) sont des données visibles du corps d'objet, caractéristiques du titulaire dudit objet.

4. Objet selon la revendication 3, **caractérisé en ce que** les données (14) visibles du corps d'objet sont formées par une photographie du titulaire de l'objet.

5. Objet selon l'une des revendications précédentes, **caractérisé en ce que** les données encodées (15) sont disposées sur le corps d'objet (11).

6. Objet selon la revendication 5, **caractérisé en ce que** les données encodées (15) sont cachées sur le corps d'objet (15).

7. Objet selon l'une des revendications 1 à 4, **caractérisé en ce que** les données encodées (15) sont enregistrées dans une mémoire de la puce (12) ou d'une autre puce de l'objet.

8. Objet selon l'une des revendications précédentes, **caractérisé en ce que** la clé est enregistrée dans une mémoire de la puce (12).

9. Objet selon l'une des revendications 1 à 7, **caractérisé en ce que** la clé est cachée sur le corps de carte (11).

10. Objet selon l'une des revendications précédentes, **caractérisé en ce que** l'algorithme cryptographique est un algorithme à clé publique/clé privée tel que, par exemple, le RSA.

11. Objet selon l'une des revendications précédentes, **caractérisé en ce que** la clé est une clé publique.

12. Objet selon l'une des revendications 1 à 11, **caractérisé en ce qu'**il est une carte à puce.

13. Procédé de sécurisation d'un objet portatif personnel comportant un corps d'objet (11), une puce électronique (12) et des moyens pour permettre une communication dudit objet avec le monde extérieur, **caractérisé en ce qu'**il comporte en outre les étapes suivantes, selon lesquelles :
l'objet est muni de données (14), de données encodées (15) correspondant à ces données et d'une clé ;
les données encodées sont décodées au moyen d'un algorithme cryptographique et de la clé ; et
les données encodées puis décodées sont comparées aux données.

14. Procédé selon la revendication 13, **caractérisé en ce qu'**on sécurise les données par un lien sécurisé entre la puce (12) et le corps d'objet (11).

15. Procédé selon l'une des revendications 13 ou 14, **caractérisé en ce que** les données sont encodées par un algorithme cryptographique au moyen d'une clé privée.

16. Procédé selon la revendication 15, **caractérisé en ce que** la clé privée est détruite.

17. Procédé selon l'une des revendications 13 à 16, **caractérisé en ce que** l'algorithme cryptographique est le RSA.
